# EUROPEAN PATENT APPLICATION

(11) **EP 1 424 122 A1**
(43) Date of publication of application: **02.06.2004**
(21) Application number: 02806711.4
(22) Date of filing: 09.08.2002
(51) Int. Cl.: B01D 61/04, B01D 61/08, B01D 61/18, B01D 61/58, C02F 1/44

(54) **INSTALLATION FOR RECYCLING AGRICULTURAL WASTE AND SIMILAR WASTE**

(30) Priority: 17.08.2001 ES 200101916
(71) Applicant: Thomassen, Johannes Adrianus, 08007 Barcelona (ES)
(72) Inventor: Thomassen, Johannes Adrianus, 08007 Barcelona (ES)
(74) Representative: Isern Jara, Nuria
(86) International application number: PCT/ES2002/000399
(87) International publication number: WO 2003/078035

(57) **Abstract**

Installation for recycling wastes from cattle and agriculture, that is made up of three operations for the separation of waste and excrement generated on pig farms or the smelly juice that oozes from olives and waste water products generated in the olive presses and mills where oil, is obtained, for the purpose of obtaining drinkable water and for its reuse in said installations. The installation includes in a first operation for separation of the liquid phase from the solid phase with a Johnson screen and a press cylinder that has a perforated shape. The liquid thus obtained is subjected to a process of micro filtration/ultra filtration in a tank at atmospheric pressure with some lower air diffusers in the body of the filtration columns for the purpose of obtaining the separation of the fibrous matter in suspension and the macro molecular substances from the liquid phase. In its last operation the installation has a pressurised tank where an inverse osmosis process is carried out in some membrane filtration elements arranged vertically and completely submerged in the liquid to be filtered, supported by a tubular structure and some support plates and said elements being fixed at the top by a coupling to the filter duct biased by a spring and an outer perforated cylinder with side fixing to each one of said elements. In turn, the filter membrane elements have a collector at the bottom for the filtered drinking water.

## Description

### OBJECT OF THE INVENTION

The object of the present Patent Invention application is an installation for recycling wastes from cattle and agriculture that incorporates significant innovations and improvements over the present installations to avoid environmental impact and pollution from cattle and agriculture wastes, especially those generated by excrements and purines from pig farms and the waste from olive presses and mills for obtaining olive oil.

More specifically the installation for recycling wastes from cattle and agriculture includes a mechanism for the separation of the solid phase and the liquid phase by means of an extractor by crushing. The first step is the filtering of the liquid phase by a micro filtration/ultra filtration installation for the removal of the fibrous elements and the small particles held in suspension, and finally the purification of the liquid by inverse osmosis into drinking water for its reuse.

### BACKGROUND TO THE INVENTION

At the present time, the farms are considering the problem of waste products generated by the excrement and purines from pigs. These waste products mainly have a liquid phase based on water with a certain part of solid phase in suspension. The purines chemically contain a high concentration of nitrates and phosphates, with which they are highly pollutant and given the fermentation generate a bad smell and the possibility of infection. Up to now the traditional system for the elimination of said waste products was the dispersion over large extensions of land, in such a way that the concentration became diluted over the land. However, this practice limited the size of the farms to the extension of land available to spread out the waste products without reaching the saturation point and a possible pollution. A similar situation is caused in the olive oil presses and mills, where the production process generates the smelly juice that oozes from olives or the fetid liquid that has to be eliminated. Generally, said juice because of its low content of solid matter, but high content of fibrous matter is stored in tanks or lakes where it is dried in the sun, producing bad smells.

### DESCRIPTION OF THE INVENTION

The object of the installation for recycling wastes from cattle and agriculture is to provide a means of eliminating the waste products generated in the pig farms and olive oil mills and by separation and thus obtaining the components which can be used and achieving a big advantage in the elimination of the nuisances caused by the storage of said waste products.

The installation mainly consists of three operations:
- Separation of the liquid phase from the solid phase. In this operation, the waste waters in the liquid phase are separated from the solid matter and which are suitable for use as fuel or fertilizer and have a low mineral content.
- Separation of the fibrous substances in suspension in the liquid phase. In this operation, the process washes the liquid phase of the waste water for the purpose of separating the fibres dissolved and those macro molecular substances that pollute the water. Said process is carried out by means of filtration in the micro filtration and ultra filtration range.
- Separation of dissolved minerals and the obtaining of drinking water. In this operation, the water is purified making it drinkable in an inverse osmosis process, eliminating the minerals contained. The drinking water can then be used once again in the farm installations, obtaining an approximate yield of something greater than 90%.

In the first solid and liquid separation operation, a procedure is used that is already known and in use on several farms to take advantage of the purines. In this operation, the mixed waste products are tipped onto an inclined Johnson screen in which part of the liquid phase is distilled. The rest of the waste in a paste is compressed in a press where a piston is introduced quickly into a cylinder whose shape is perforated. In the degree that the waste is compressed the liquid phase pours through the grooves in the cylinder and is collected together with the liquid coming from the Johnson screen. The solid waste thus obtained on the inside of the cylinder can be extracted by means of a guillotine gate fitted to the lower part of the press. The solid waste with a low mineral content can be used as a fertiliser or as fuel.

In the second phase, there is a washing of the liquid phase in order to eliminate the fibrous particles held in suspension and the macro molecular substances. In effect, the liquid phase obtained from the previous operation is substantially water, but it contains a high concentration of fibres and dissolved substances mainly made up of large sized molecules, such as cellulose and others. In this second operation, the carrying out of a filtration is proceeded with in the micro filtration and ultra filtration range. This separation is carried out in an inverted washing column that can be installed inside the storage tanks themselves already present on the farm or similar. Said columns are made up of a tubular filtration membrane in the micro filtration/ultra filtration range, and are arranged vertically. Depending on the size of the storage tank several of the columns can be placed in parallel. The pressure difference necessary for its working is generated by means of a vacuum system connected to the filtered liquid extraction duct, the rest of the tank remaining at atmospheric pressure. Said vacuum system generates, between both sides of the filtration membrane, a depression of approximately between 0.2 and 0.5 bars compared to atmospheric pressure. In order to reduce the build up of dirt on the filter membrane under the columns there is a system of air diffusers, whose objective is to generate turbulences that make the build up of dirt difficult. However, in order to make the cleaning of the filtration membranes easier, a system of inverted washing is installed which consists of a mechanism capable of momentarily inverting the pressure difference between both sides of the membrane. This means that when a considerable quantity of dirt has built up on the surface of the membrane, the vacuum is interrupted and for an instant overpressure is injected into the membrane, in such a way that the liquid flow through is inverted and the layer of dirt is removed, the filtration operation by vacuum being able to be continued. The type of installation that is used in this second operation is known in other fields of the chemical and environmental industries, but its application to this problem is new.

In the third operation, a process of inverse osmosis is carried out that eliminates the rest of the substances that are held in the water in order to make it drinkable. The water coming from the previous operation is now free of fibres and macro molecular substances, but still contains free ions and single molecules that must be separated before it becomes drinkable. In order to do this an inverse osmosis device has been thought up that is contained in a newly invented pressure tank. The inverse osmosis system is made up of a pressure tank or container with the ability to maintain an internal pressure of from 10 to 25 bars, depending on the liquid phase osmotic pressure necessary. Inside said pressurised tank, there are a series of filtration elements made up of inverse osmosis tubular membranes arranged in columns. Said membranes are completely submerged in the liquid to be filtered and are arranged respectively on some support plates fitted onto a grid or support structure, over a lower drainage space. The inverse osmosis membranes are held at the top by an external perforated tube and a spring biased coupling. The fluid circulation through the membrane is carried out in an upward direction from the lower support plate towards the upper perforated support, allowing the re-circulation of the liquid. The filtered water is collected in the lower part of the casing by a main collector and is extracted for use as drinking water. The pressurised tank is fed with the liquid to be filtered by means of a pump that lifts the pressure of the liquid up to an internal pressure of between 10 and 25 bars, as has been stated previously. In the upper part of the tank, there is a connection for the extraction of the liquid below the hydrostatic level and which is connected with the liquid feed pump, thus encouraging the re-circulation of the liquid in the tank. The outer tank is of the type that has an opening upper lid, in such a way that the maintenance operation and changing of filter elements can be carried out quickly as a result of being arranged in a vertical position. The entire inverse osmosis process is carried out automatically without the need to carry out meticulous control of the re-circulation operation. The tank has a lower drain for the extraction of the concentrated minerals, the cleaning of the membranes being carried out in a regular manner by means of the introduction of a cleaning solution into the membrane pipes and re-circulating it for the required time.

In order to complement the description that has been made and for the purpose of making the characteristics of the invention easier to understand, attached to this present document is a set of drawings in which, by way of being illustrative but not limiting, the most significant details have been represented.

### BRIEF DESCRIPTION OF THE DRAWINGS

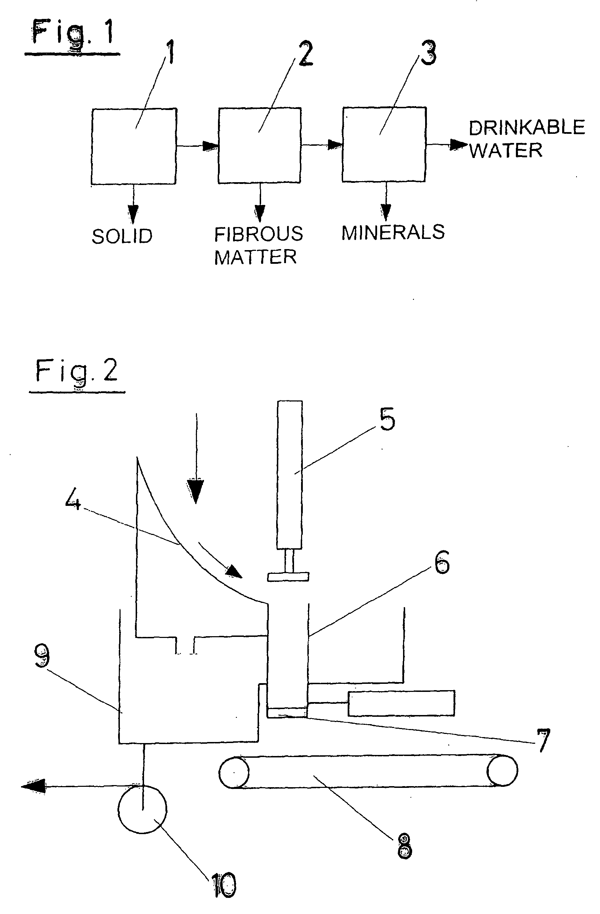

Figure 1. Shows a diagram of the installation operation
Figure 2. Shows a representative diagram of the separation equipment of the phases in the first operation.

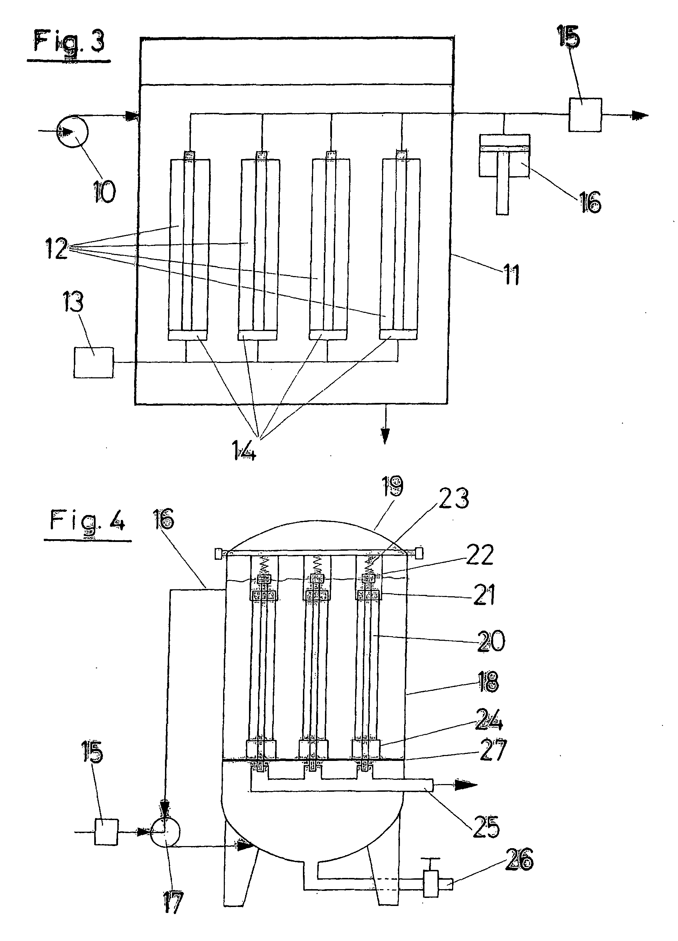

Figure 3. Shows a representative diagram of the micro filtration/ultra filtration equipment in the second operation.
Figure 4. Shows a representative diagram of the inverse osmosis equipment in the third operation.

### DESCRIPTION OF A PREFERRED EMBODIMENT

In view of the figures commented on, and in accordance with the numbering adopted, a preferred embodiment of the invention can be seen in same that is not by way of limitation. This consists of a solid-liquid separation operation (1), a washing and separation operation (2) of the fibrous matter by micro filtration/ultra filtration and a third inverse osmosis purification operation (3). The installation is made up of a reception hopper which includes a sloping Johnson screen (4) for the separation of the liquids by gravity. The hopper opens into a press (6) that has a cylindrical shape and is perforated, over which there is a hydraulic pressure piston (5), at the bottom there is a guillotine gate (7) fitted for the extraction of the solid waste by means of a conveyor belt (8). The cylindrical press (6) is contained within a liquid tank (9) or collection tub and emptier for the Johnson screen (4), said tank (9) being connected to a pump (10) for the extraction. The outlet from said extraction pump (10) opens into the tank or container (11) at atmospheric pressure. On the inside of said tank (11), there is a series of micro filtration/ultra filtration filter elements (12), arranged in columns. Under each one of said micro filtration elements (12) there is an air bubble diffuser (14) installed inside the liquid contained. Said diffusers (14) are fed by an external compressor (13). The filtration extraction ducts of said elements (12) are subjected to a vacuum by means of a vacuum pump (15) installed in the extraction duct. In said extraction duct there is a hydraulic excess pressure element (16) pulsating for the cleaning of the filtration elements (12). After the vacuum pump (15), there is a pressure pump (17) and a feed to the inverse osmosis device. Said device is made up of a pressurised tank (18) with an upper opening lid (19), on the inside of which there is a support structure (27) for the inverse osmosis filtration membrane elements (20), and which are completely submerged in the liquid to be filtered. Said elements (20) are fixed to the above stated structure (27) respectively by means of a lower support plate (24) and liquid duct. Said filtration elements (20) are fixed at the top, respectively, by a coupling (22) held in position by a spring (23) and at the end of the filtration duct and a cylindrical perforated body (21) with external fixing. Each one of the membrane elements emptying ducts of the filtration is connected at the bottom to a collector (25) for the drinkable water. In turn, the tank (18) has an extraction outlet (16) at the top for the liquid contained and for the re-circulation of same, connected to a pressure pump (17). At the bottom of the tank (18), there is a lower drainage outlet (26) for the complete emptying.

## Claims

1. Installation for recycling wastes from cattle and agriculture, especially suitable for the recycling of the purines produced on pig farms and the smelly juice that oozes from olives and waste products generated in the olive presses and mills where olive oil, amongst other products, are obtained, which uses a process that in a simplified manner has the following stages: (1) the separation of the solid phase from the liquid phase of the waste water, (2) filtration of the liquid phase by means of filtration membrane elements (12) for micro filtration/ultra filtration to eliminate the fibrous matter held in suspension and the macro molecular substances and (3) for the obtaining of drinkable water from the liquid phase by an inverse osmosis process, **characterised in that** it is made up of a pressurised tank (18) for the inverse osmosis operation, the tank (18) being covered at the top by a removable lid (19) and on the inside there is a series of inverse osmosis filtration elements (20), with a tubular manner and arranged parallel in the columns, with the filtration duct arranged axially, completely submerged in the body of the liquid to be filtered.

2. Installation for recycling wastes from cattle and agriculture, according to claim 1, **characterised in that** the stated filter elements (20) are arranged on a lower support structure (27) and fitted respectively by means of fixing plates (24) to said structure (27) and the channelling of the liquid to be filtered; and **in that** each filter element (20) is fitted at the upper part of the filtration tank (18) by means of a coupling (22) encased at the upper most point of the filter duct, said coupling (22) being biased by a spring (23) and assisted by an external perforated cylinder (21) held at the side that partially covers the outer casing of the end of the filter element (20), said filter element (20) being completely submerged in the liquid to be filtered; and **in that** the lower end of the filter element (20) filtration duct is connected to a drinking water collector (25) for its removal; and **in that** at the top of the tank (18) there is an extractor (16) or natural re-circulation take-off for the liquid on the inside, said extraction (16) being connected to a pressure pump (17) and tank feed (18) of the inverse osmosis device; and **in that** the tank (18) has an outlet (26) at the bottom for draining and cleaning.
